(19)

**Europäisches Patentamt**
**European Patent Office**
**Office européen des brevets**

(11) **EP 3 542 891 A1**

(12) **EUROPEAN PATENT APPLICATION**
published in accordance with Art. 153(4) EPC

(43) Date of publication:
**25.09.2019 Bulletin 2019/39**

(21) Application number: **17871683.3**

(22) Date of filing: **16.11.2017**

(51) Int Cl.:
**B01D 69/02** $^{(2006.01)}$     **B01D 61/36** $^{(2006.01)}$
**B01D 69/10** $^{(2006.01)}$     **B01D 69/12** $^{(2006.01)}$
**B01D 71/56** $^{(2006.01)}$     **B32B 5/18** $^{(2006.01)}$

(86) International application number:
**PCT/JP2017/041341**

(87) International publication number:
**WO 2018/092858 (24.05.2018 Gazette 2018/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.11.2016 JP 2016224163**

(71) Applicant: **NITTO DENKO CORPORATION**
**Ibaraki-shi,**
**Osaka 567-8680 (JP)**

(72) Inventors:
 • **KIMURA, Naomichi**
  **Ibaraki-shi**
  **Osaka 567-8680 (JP)**

 • **IHARA, Terukazu**
  **Ibaraki-shi**
  **Osaka 567-8680 (JP)**
 • **ISHII, Katsumi**
  **Ibaraki-shi**
  **Osaka 567-8680 (JP)**
 • **SHIMAZU, Akira**
  **Ibaraki-shi**
  **Osaka 567-8680 (JP)**
 • **ITO, Yuri**
  **Ibaraki-shi**
  **Osaka 567-8680 (JP)**

(74) Representative: **Hoffmann Eitle**
**Patent- und Rechtsanwälte PartmbB**
**Arabellastraße 30**
**81925 München (DE)**

(54) **SEPARATION MEMBRANE AND LAMINATE**

(57)    An aspect of the present invention relates to a separation membrane for selectively separating a component (A) from a fluid containing the component (A) and a component (B), wherein the separation membrane has a first surface and a second surface opposite to the first surface, an affinity of the first surface side of the separation membrane for the component (A) is higher than an affinity of the first surface side of the separation membrane for the component (B), and an affinity of the second surface side of the separation membrane for the component (A) is higher than the affinity of the first surface side of the separation membrane for the component (A).

EP 3 542 891 A1

**Description**

TECHNICAL FIELD

The present invention relates to a separation membrane and a laminate comprising the same.

BACKGROUND ART

In order to separate a target component from a fluid containing a plurality of components, a membrane separation method, for example, a pervaporation method or a vapor permeation method has been used.

For example, in Patent Document 1, there is disclosed a separation method of a liquid mixture in which a liquid mixture containing a hydrocarbon liquid and an alcohol liquid is brought into contact with a membrane feeding side of a separation membrane, for example, a carbon membrane in a liquid state, as a feeding mixture liquid and is discharged from a membrane permeation side of the separation membrane in a vapor state, whereby a composition of the mixed vapor equilibrated with the feeding mixture liquid and a composition of the vapor on the membrane permeation side are made different from each other.

Further, in Patent Document 2, a silica membrane and a separation membrane filter for selectively separating an alcohol from an organic mixed fluid are described.

Further, in Patent Document 3, it is disclosed that a membrane containing a polyether amine in which the membrane is formed by reacting with an epoxide is used in order to selectively separate an aromatic compound from a hydrocarbon stream containing the aromatic compound, an aliphatic compound and at least one alcohol. Further, in Patent Document 4, it is disclosed that a membrane containing a polyether epoxy resin having an aliphatic substituted epoxide is used for the same purpose as in Patent Document 3.

CITATION LIST

PATENT LITERATURE

Patent Document 1: WO2010/070992
Patent Document 2: WO2016/148132
Patent Document 3: JP-A-2012-501830
Patent Document 3: JP-A-2014-518754

SUMMARY OF INVENTION

TECHNICAL PROBLEM

However, according to the techniques described in Patent Documents 1 to 4, a permeance and selectivity of the separation object are not sufficient and further improvements have been desired.

Therefore, an object of the invention is to provide a separation membrane and laminate capable of separating a target component at a high permeance and high selectivity from a fluid containing a plurality of components.

SOLUTION TO PROBLEM

As a result of the earnest investigations in view of the problem described above, the inventors have found that the problem described above can be solved by a separation membrane or laminate having the constitution described below to complete the invention.

One aspect of the invention relates to a separation membrane for selectively separating a component (A) from a fluid containing the component (A) and a component (B),
the separation membrane comprising a first surface and a second surface opposite to the first surface,
wherein an affinity of the first surface side of the separation membrane for the component (A) is higher than an affinity of the first surface side of the separation membrane for the component (B), and
wherein an affinity of the second surface side of the separation membrane for the component (A) is higher than the affinity of the first surface side of the separation membrane for the component (A).

In the separation membrane described above, the affinity of the second surface side of the separation membrane for the component (A) may be higher than an affinity of the second surface side of the separation membrane for the component (B).

Further, one aspect of the invention relates to a separation membrane for selectively separating a component (A) from a fluid containing the component (A) and a component (B),

the separation membrane comprising a first surface and a second surface opposite to the first surface,

wherein the separation membrane satisfies relationships represented by formula (1) and formula (2) described below:

$$\left|SP_1 - SP_A\right| < \left|SP_1 - SP_B\right| \qquad (1)$$

$$\left|SP_2 - SP_A\right| < \left|SP_1 - SP_A\right| \qquad (2)$$

wherein $SP_A$ represents an SP value of the component (A), $SP_B$ represents an SP value of the component (B), $SP_1$ represents an SP value of the first surface side of the separation membrane, and $SP_2$ represents an SP value of the second surface side of the separation membrane.

The separation membrane described above may further satisfy a relationship represented by formula (3) described below.

$$\left|SP_2 - SP_A\right| < \left|SP_2 - SP_B\right| \qquad (3)$$

Further, one aspect of the invention relates to a separation membrane for selectively separating a component (A) from a fluid containing the component (A) and a component (B),

the separation membrane comprising a first surface and a second surface opposite to the first surface,

wherein an interaction energy between the component (A) and the first surface side of the separation membrane is higher than an interaction energy between the component (B) and the first surface side of the separation membrane, and wherein an interaction energy between the component (A) and the second surface side of the separation membrane is lower than the interaction energy between the component (A) and the first surface side of the separation membrane.

In the separation membrane described above, the interaction energy between the component (A) and the second surface side of the separation membrane may be higher than an interaction energy between the component (B) and the second surface side of the separation membrane.

In any one of the separation membranes described above, a free volume fraction of the first surface side of the separation membrane may be smaller than a free volume fraction of the second surface side of the separation membrane.

In any one of the separation membranes described above, a swelling amount of the first surface side of the separation membrane with the fluid may be smaller than a swelling amount of the second surface side of the separation membrane with the fluid.

In any one of the separation membranes described above, a vapor permeance ratio in terms of the component (A) to the component (B) of the first surface side of the separation membrane may be larger than a vapor permeance ratio in terms of the component (A) to the component (B) of the second surface side of the separation membrane.

In any one of the separation membranes described above, a concentration of the component (A) occupied in a swelling component when the first surface side of the separation membrane is swollen with the fluid may be larger than a concentration of the component (A) occupied in a swelling component when the second surface side of the separation membrane is swollen with the fluid.

Further, one aspect of the invention relates to a separation membrane for selectively separating a component (A) from a fluid containing the component (A) and a component (B),

the separation membrane comprising a first surface and a second surface opposite to the first surface,

wherein a swelling amount of the first surface side of the separation membrane with the fluid is smaller than a swelling amount of the second surface side of the separation membrane with the fluid, and

wherein a vapor permeance ratio in terms of the component (A) to the component (B) of the first surface side of the separation membrane is larger than a vapor permeance ratio in terms of the component (A) to the component (B) of the second surface side of the separation membrane.

In the separation membrane described above, a concentration of the component (A) occupied in a swelling component when the first surface side of the separation membrane is swollen with the fluid may be larger than a concentration of the component (A) occupied in a swelling component when the second surface side of the separation membrane is swollen with the fluid.

Further, any one of the separation membranes described above may comprise a multilayer structure comprising at least a first layer providing the first surface and a second layer providing the second surface.

Further, the invention also relates to a laminate comprising a porous support and any one of the above-mentioned separation membranes provided on the porous support.

ADVANTAGEOUS EFFECTS OF INVENTION

According to the separation membrane and laminate of the invention, a target component can be separated at a high permeance and high selectivity from a fluid containing a plurality of components.

DESCRIPTION OF EMBODIMENTS

Embodiments of the invention are described in detail below.

The separation membrane according to one embodiment is a separation membrane for selectively separating a component (A) from a fluid containing the component (A) and a component (B), wherein the separation membrane has a first surface and a second surface opposite to the first surface, an affinity of the first surface side of the separation membrane for the component (A) is higher than an affinity of the first surface side of the separation membrane for the component (B), and an affinity of the second surface side of the separation membrane for the component (A) is higher than the affinity of the first surface side of the separation membrane for the component (A).

Here, in the specification "selectively separating a component (A)" is not limited to separate only the component (A) from a fluid containing the component (A) and the component (B) and also includes a case where a volume ratio $(A_a/B_a)$ of the component (A) to the component (B) in the permeated matter permeated through the separation membrane is higher than a volume ratio $(A_b/B_b)$ of the component (A) to the component (B) in the fluid which contains the component (A) and the component (B) and is not permeated through the separation membrane.

Further, the higher the ratio of the volume ratio $(A_a/B_a)$ of the component (A) to the component (B) in the permeated matter permeated through the separation membrane to the volume ratio $(A_b/B_b)$ of the component (A) to the component (B) in the fluid which contains the component (A) and the component (B) and is not permeated through the separation membrane, the higher the selectivity of the component (A).

The component (A) is a component (separation object component) which is desired to be selectively separated from the liquid. Here, the component (A) is not limited to only one kind, and when a plurality of components which are desired to be selectively separated are contained in the fluid, the component (A) can be two or more kinds.

Further, the component (B) is a component which is not desired to be separated from the fluid. Here, in the same manner as in the component (A), the component (B) is not limited to only one kind, and when a plurality of components which are not desired to be separated are contained in the fluid, the component (B) can be two or more kinds.

Further, the fluid treated with the separation membrane of the embodiment contains at least the component (A) and the component (B). Here, the fluid may contain only the component (A) and the component (B), or the fluid may contain a component (C) which is different from the component (A) and the component (B). The component (C) is, for example, a component which is not positively desired to be selectively separated from the fluid and does not affect the selectivity even when it permeates the separation membrane as a permeated matter.

The separation membrane of the embodiment has a first surface and a second surface opposite to the first surface. The separation membrane of the embodiment is used typically in a manner so that the first surface side of the separation membrane is brought into contact with the fluid, and a permeated matter from the fluid is penetrated into the separation membrane from the first surface side of the separation membrane and is permeated from the second surface side. For example, in the case of selectively separating the component (A) from the fluid containing the component (A) and the component (B) by a pervaporation method, the first surface side of the separation membrane is brought into contact with a liquid mixture as the fluid, and a permeated matter from the liquid mixture is penetrated into the separation membrane from the first surface side of the separation membrane and is permeated from the second surface side as gas (vapor). The first surface side may be referred to as a feeding side, and the second surface side may be referred to as a permeation side.

In the separation membrane of the embodiment, the affinity of the first surface side of the separation membrane for the component (A) is higher than the affinity of the first surface side of the separation membrane for the component (B). In this way, when the fluid containing the component (A) and the component (B) is brought into contact with the first surface side of the separation membrane, since the component (A) having higher affinity for the first surface side of the separation membrane in comparison with the component (B) is preferentially penetrated into the separation membrane, the selectivity of the component (A) can be enhanced.

Further, in the separation membrane of the embodiment, the affinity of the second surface side of the separation membrane for the component (A) is higher than the affinity of the first surface side of the separation membrane for the component (A). In this way, since the component (A) in the permeated matter penetrated into the separation membrane from the first surface side is rapidly permeated toward the second surface side having higher affinity, the permeance can be enhanced.

Here, according to the specification, the "affinity" between different materials can be evaluated using an SP value (solubility parameter), a free volume fraction, a penetration rate, a ratio of a swelling component (concentration of each component in the swelling component) or the like, as an index.

In the separation membrane of the embodiment, it is preferred that the affinity of the second surface side of the separation membrane for the component (A) is higher than the affinity of the second surface side of the separation membrane for the component (B). In this way, when the component (A) and the component (B) are contained in the permeated matter penetrated into the separation membrane from the first surface side, since the component (A) having higher affinity for the second surface side of the separation membrane in comparison with the component (B) is preferentially penetrated toward the second surface side, the selectivity of the component (A) can be more enhanced. Further, since the component (A) is penetrated relatively more rapidly toward the second surface side than the component (B), the permeance of the compound (A) can be more enhanced.

Further, the separation membrane according to one aspect is a separation membrane for selectively separating a component (A) from fluid containing the component (A) and a component (B), wherein the separation membrane has a first surface and a second surface opposite to the first surface, and satisfies relationships represented by formula (1) and formula (2) described below.

$$\left| SP_1 - SP_A \right| < \left| SP_1 - SP_B \right| \qquad (1)$$

$$\left| SP_2 - SP_A \right| < \left| SP_1 - SP_A \right| \qquad (2)$$

wherein $SP_A$ represents an SP value of the component (A), $SP_B$ represents an SP value of the component (B), $SP_1$ represents an SP value of the first surface side of the separation membrane, and $SP_2$ represents an SP value of the second surface side of the separation membrane.

In the separation membrane of the aspect, an absolute difference ($|SP_1 - SP_A|$) between the SP value ($SP_1$) of the first surface side of the separation membrane and the SP value ($SP_A$) of the component (A) is smaller than an absolute difference ($|SP_1 - SP_B|$) between the SP value ($SP_1$) of the first surface side of the separation membrane and the SP value ($SP_B$) of the component (B). In this way, when the fluid containing the component (A) and the component (B) is brought into contact with the first surface side of the separation membrane of the aspect, since the component (A) having the SP value closer to the SP value of the first surface side of the separation membrane in comparison with the component (B) is preferentially penetrated into the separation membrane, the selectivity of the component (A) can be enhanced.

$|SP_1 - SP_B| - |SP_1 - SP_A|$ is preferably 1 or more, and more preferably 1.5 or more.

Further, in the separation membrane of the aspect, an absolute difference ($|SP_2 - SP_A|$) between the SP value ($SP_2$) of the first surface side of the separation membrane and the SP value ($SP_A$) of the component (A) is smaller than an absolute difference ($|SP_1 - SP_A|$) between the SP value ($SP_1$) of the first surface side of the separation membrane and the SP value ($SP_A$) of the component (A). In this way, since the component (A) in the permeated matter penetrated into the separation membrane from the first surface side is rapidly permeated toward the second surface side having the SP value closer to the SP value of the component (A) in comparison with the SP value of the first surface side, the permeance can be enhanced.

The separation membrane of the aspect is preferred to further satisfy a relationship represented by formula (3) described below.

$$\left| SP_2 - SP_A \right| < \left| SP_2 - SP_B \right| \qquad (3)$$

In this way, when the component (A) and the component (B) are contained in the permeated matter penetrated into the separation membrane from the first surface side, since the component (A) having the SP value closer to the SP value of the second surface side of the separation membrane in comparison with the component (B) is preferentially penetrated toward the second surface side, the selectivity of the component (A) can be more enhanced. Further, since the component (A) is penetrated relatively more rapidly toward the second surface side than the component (B), the permeance of the compound (A) can be more enhanced.

$|SP_2 - SP_B| - |SP_2 - SP_A|$ is more preferably 1 or more, and still more preferably 1.5 or more.

In the specification, the SP value (solubility parameter) of a certain substance denotes a value calculated by a method prescribed by Robert F. Fedors (Fedors method).

Further, the separation membrane according to one embodiment is a separation membrane for selectively separating a component (A) from a fluid containing the component (A) and a component (B), wherein the separation membrane has a first surface and a second surface opposite to the first surface, an interaction energy between the component (A) and the first surface side of the separation membrane is higher than an interaction energy between the component (B) and the first surface side of the separation membrane, and an interaction energy between the component (A) and the second surface side of the separation membrane is lower than the interaction energy between the component (A) and the first surface side of the separation membrane.

In the separation membrane of the embodiment, the interaction energy between the component (A) and the first surface side of the separation membrane is higher than the interaction energy between the component (B) and the first surface side of the separation membrane. In this way, when the fluid containing the component (A) and the component (B) is brought into contact with the first surface side of the separation membrane of the embodiment, since the component (A) having higher interaction energy with respect to the first surface side of the separation membrane in comparison with the component (B) is preferentially penetrated into the separation membrane, the selectivity of the component (A) can be enhanced.

The interaction energy between the component (A) and the first surface side of the separation membrane is preferably 20 cal/angstrom$^3$-polym or more, and more preferably 50 cal/angstrom$^3$-polym or more higher than the interaction energy between the component (B) and the first surface side of the separation membrane.

Further, in the separation membrane of the embodiment, the interaction energy between the component (A) and the second surface side of the separation membrane is lower than the interaction energy between the component (A) and the first surface side of the separation membrane. In this way, the selectivity of the component (A) of the first surface side can be enhanced.

The interaction energy between the component (A) and the second surface side of the separation membrane is preferably 1 cal/angstrom$^3$-polym or more, and more preferably 10 cal/angstrom$^3$-polym or more lower than the interaction energy between the component (A) and the first surface side of the separation membrane.

In the separation membrane of the embodiment, it is preferred that the interaction energy between the component (A) and the second surface side of the separation membrane is higher than the interaction energy between the component (B) and the second surface side of the separation membrane. In this way, when the component (A) and the component (B) are contained in the permeated matter penetrated into the separation membrane from the first surface side, since the component (A) having higher interaction energy with respect to the second surface side of the separation membrane in comparison with the component (B) is preferentially penetrated toward the second surface side, the selectivity of the component (A) can be more enhanced.

The interaction energy between the component (A) and the second surface side of the separation membrane is more preferably 10 cal/angstrom$^3$-polym or more, and still more preferably 20 cal/angstrom$^3$-polym or more higher than the interaction energy between the component (B) and the second surface side of the separation membrane.

In the specification, the interaction energy between different materials denotes a value obtained according to structural optimization by a semi-empirical molecular orbital PM6 method and calculation by a density functional method B3LYP/3-21G*.

Further, in each separation membrane described above, a free volume fraction of the first surface side of the separation membrane is preferably smaller than a free volume fraction of the second surface side of the separation membrane. In this way, a chance of contact between the fluid and the first surface side of the membrane is increased at a molecular level and a state where the interaction energy between the fluid and the first surface side of the membrane is easily produced is formed, so that the selectivity can be improved.

The free volume fraction of the first surface side of the separation membrane is more preferably 0.01 or more, and still more preferably 0.02 or more smaller than the free volume fraction of the second surface side of the separation membrane.

Here, in the specification, the free volume fraction denotes a value calculated according to the formula described below using Bondi method.

$$V_f = (V - V_0)/V$$

(wherein $V_0 = 1.3\ V_w$)

$V_f$: free volume fraction

V: molar volume at a measurement temperature = MW/$\rho$ (cm$^3$/mol)

(wherein MW is a molecular weight of a repeating unit structure of a polymer, and $\rho$ is a density of the polymer at a measurement temperature)

Vo: molar volume at 0K (cm$^3$/mol)

$V_w$: van der Waals volume (which is a molecule-specific value and is calculated by a molecular dynamics method using a COMPASS force field)

In each separation membrane described above, a swelling amount of the first surface side (swelling amount of a portion including the first surface) is preferably smaller than a swelling amount of the second surface side (swelling amount of a portion including the second surface). As the swelling amount of the first surface side (swelling amount of a portion including the first surface) becomes smaller, the portion becomes more rigid and the selectivity of the component (A) can be enhanced. Further, as the swelling amount of the second surface side (swelling amount of a portion including the second surface) becomes larger, the portion permeates a larger amount of the permeated matter, so that the permeance can be enhanced. Here, in the case where the separation membrane is a separation membrane having a multilayer structure comprising at least a first layer and a second layer as described later, the first surface side (portion including the first surface) means the first layer and the second surface side (portion including the second surface) means the second layer. Further, the swelling amount means a swelling amount obtained by being brought into contact with the predetermined fluid containing the component (A) and the component (B) for the prescribed time.

More specifically, the swelling amount (unit: g/g) can be obtained by immersing the membrane in a fluid containing the component (A) and the component (B) at 25°C for 24 hours, measuring the weights before and after the immersion and calculating according to the formula described below.

$$\text{Swelling amount} = (\text{membrane weight after immersion} - \text{membrane weight before immersion})/\text{membrane weight before immersion}$$

In each separation membrane of the embodiments, the swelling amount of the first surface side is preferably 0.03 g/g or more, and more preferably 0.05 g/g or more, smaller than the swelling amount of the second surface side.

Further, in each separation membrane of the embodiments, a vapor permeance ratio in terms of the component (A) to the component (B) of the first surface side of the separation membrane is larger than a vapor permeance ratio of the component (A) to the component (B) of the second surface side of the separation membrane. In this way, the selectivity can be improved.

Here, the vapor permeance ratio in terms of the component (A) to the component (B) of the first surface side of the separation membrane is a value obtained by dividing a vapor permeance (unit: GPU) of the component (A) of the first surface side by a vapor permeance (unit: GPU) of the component (B) of the first surface side. Further, the vapor permeance ratio in terms of the component (A) to the component (B) of the second surface side of the separation membrane is a value obtained by dividing a vapor permeance (unit: GPU) of the component (A) of the second surface side by a vapor permeance (unit: GPU) of the component (B) of the second surface side.

The vapor permeance (unit: GPU) can be measured by being brought into contact the membrane with vapor of the fluid containing the component (A) and the component (B) and performing component analysis of the vapor permeated through the membrane by gas chromatography.

In each separation membrane of the embodiments, the vapor permeance ratio in terms of the component (A) to the component (B) of the first surface side of the separation membrane is preferably 10 or more, and more preferably 20 or more larger than the vapor permeance ratio of the component (A) of the second surface side of the separation membrane to the component (B).

In each separation membrane of the embodiments, a concentration of the component (A) occupied in a swelling component(s) when the first surface side of the separation membrane is swollen with the fluid is preferably larger than a concentration of the component (A) occupied in a swelling component(s) when the second surface side of the separation membrane is swollen with the fluid. In this way, the selectivity can be improved.

The concentration of each component occupied in a swelling component(s) can be measured by heating the membrane after immersion by a head space sampler and measuring the gas phase after heating by gas chromatography.

In each separation membrane of the embodiments, the concentration of the component (A) occupied in a swelling component(s) when the first surface side of the separation membrane is swollen with the fluid is more preferably 5% or more, and still more preferably 10% or more, larger than the concentration of the component (A) occupied in a swelling component(s) when the second surface side of the separation membrane is swollen with the fluid.

Further, the separation membrane according to one embodiment is a separation membrane for selectively separating a component (A) from a fluid containing the component (A) and a component (B), wherein the separation membrane has a first surface and a second surface opposite to the first surface, a swelling amount of the first surface side of the separation membrane with the fluid is smaller than a swelling amount of the second surface side of the separation membrane with the fluid, and a vapor permeance ratio in terms of the component (A) to the component (B) of the first surface side of the separation membrane is larger than a vapor permeance ratio of in terms the component (A) to the component (B) of the second surface side of the separation membrane.

In the separation membrane of the embodiment, a swelling amount of the first surface side (swelling amount of a portion including the first surface) is smaller than a swelling amount of the second surface side (swelling amount of a portion including the second surface). The reason for this is same as that described above. Namely, as the swelling amount of the first surface side (swelling amount of a portion including the first surface) becomes smaller, the portion becomes more rigid and the selectivity of the component (A) can be enhanced. Further, as the swelling amount of the second surface side (swelling amount of a portion including the second surface) becomes larger, the portion permeates a larger amount of the permeated matter, so that the permeance can be enhanced.

Further, in the separation membrane of the embodiment, the vapor permeance ratio in terms of the component (A) to the component (B) of the first surface side of the separation membrane is larger than the vapor permeance ratio in terms of the component (A) to the component (B) of the second surface side of the separation membrane. The reason for this is same as that described above, that is, because the selectivity can be improved.

In the separation membrane of the embodiment, a concentration of the component (A) occupied in a swelling component(s) when the first surface side of the separation membrane is swollen with the fluid is preferably larger than a concentration of the component (A) occupied in a swelling component(s) when the second surface side of the separation membrane is swollen with the fluid. The reason for this is same as that described above, that is, because the selectivity can be improved.

The layer constitution of the separation membranes described above is not particularly limited as long as the first surface side and the second surface side satisfy the relationships described above, and for example, the separation membrane may have a multilayer structure including at least a first layer providing the first surface and a second layer providing the second surface.

According to the multilayer structure including at least a first layer providing the first surface and a second layer providing the second surface, the separation membrane described above can be easily constituted by appropriately selecting the constituent materials of the first layer and the second layer in consideration of affinity for the component (A) or the component (B) in such a manner that an affinity of the first surface side of the separation membrane for the component (A) becomes higher than an affinity of the first surface side of the separation membrane for the component (B) and an affinity of the second surface side of the separation membrane for the component (A) becomes higher than the affinity of the first surface side of the separation membrane for the component (A).

In the separation membrane having a multilayer structure including the first layer and the second layer, the first layer and the second layer may be directly laminated or may be indirectly laminated via an adhesive layer or the like. The state where the first layer and the second layer are directly laminated denotes that a surface opposite to the first surface side of the first layer is directly contacted with a surface opposite to the second surface side of the second layer without interposing other layer between the first layer and the second layer.

Further, the separation membrane having a multilayer structure may further comprise one or more layers different from the first layer and the second layer as long as the effect of the invention is exhibited.

The material constituting the separation membranes described above is not particularly limited and can be appropriately selected to use from a polymer-based material, a ceramic-based material and the like in consideration of relationship to the component (A) and the component (B) in the fluid or the like. The polymer-based material includes, for example, a polyether-based resin, a cellulose acetate-based resin, a polyimide-based resin, a silicone-based resin and a fluorine-based resin. Further, a membrane composed of the ceramic-based material includes, for example, a mesoporous silica membrane, a zeolite membrane and a carbon membrane. In the case of the separation membrane having a multilayer structure comprising at least the first layer and the second layer, the materials of the first layer and the second layer can also be appropriately selected to use from the materials exemplified above, respectively.

Further, the separation membrane described above may be a nonporous membrane having no pores or a microporous membrane having pores depending on the constituent material.

The average pore diameter of the pores in the case of the microporous membrane is not particularly limited and depending on a molecular size of the component to be permeated, it is, for example, 0.1 nm or more, and preferably 0.3 nm or more. Further, depending on a molecular size of the component which does not want to be permeated, it is, for example, 5 nm or less, and preferably 1 nm or less. The average pore diameter of the pores can be determined according to analysis of an absorption isotherm of gas by a physical adsorption model (BET). Alternatively, permeation tests with gases having different molecular sizes are performed and a boundary where permeability is extremely lowered can be regarded as the pore diameter.

In the case of the separation membrane having a multilayer structure including at least the first layer and the second layer, each of the first layer and the second layer may be a nonporous membrane or a microporous membrane.

The thickness of the separation membrane described above is not particularly limited and from the standpoint of expression of selectivity it is preferably 10 nm or more, and more preferably 50 nm or more. Further, from the standpoint of the permeance, the thickness of the separation membrane is preferably 2 $\mu$m or less, and more preferably 500 nm or less.

In the case of the separation membrane having a multilayer structure including at least the first layer and the second layer, the thickness of the first layer is preferably 10 nm or more, and more preferably 50 nm or more from the standpoint of expression of selectivity. Further, the thickness of the first layer is preferably 1 μm or less, and more preferably 500 nm or less from the standpoint of the permeance.

Further, the thickness of the second layer is preferably 50 nm or more, and more preferably 200 nm or more from the standpoint of adhesion to the support. Further, the thickness of the second layer is preferably 2 μm or less, and more preferably 1 μm or less from the standpoint of the permeance.

Further, from the standpoint of the permeance the thickness of the first layer is preferably less than the thickness of the second layer.

Further, the separation membrane described above may be used as a laminate laminated on a porous support for the purpose of improvement in strength, adhesion or ease of thinning of layer. The porous support may be provided on the first surface side of the separation membrane or may be provided on the second surface side of the separation membrane, and from the standpoint of selectivity and permeability, it is preferably provided on the second surface side of the separation membrane. Further, the laminate may include a plurality of separation membranes and/or a plurality of porous supports and, for example, it may have a structure in which a separation membrane is laminated on both sides of a porous support.

The porous support can be appropriately selected from a nonwoven fabric, porous polytetrafluoroethylene, an aromatic polyamide fiber, a porous metal, a sintered metal, porous ceramic, porous polyester, porous nylon, an activated carbon fiber, a latex, silicone, silicone rubber, a permeable (porous) polymer including polyvinyl fluoride, polyvinylidene fluoride, polyurethane, polypropylene, polyethylene, polycarbonate, polysulfone and polyphenylene oxide, metal foam, polymer foam (open cell and closed cell), silica, porous glass, a mesh screen and the like, or two or more selected from these materials may be used in an appropriate combination.

The thickness of the porous support in not particularly limited, and in order to sufficiently improve the strength, it is preferably 10 μm or more, and more preferably 50 μm or more. Further, in view of excessive increase in the volume of the entire membrane, it is preferably 300 μm or less, and more preferably 200 μm or less.

The fluid which is an object of the treatment by the separation membrane or laminate described above contains at least a component (A) which is a component that is desired to be selectively separated from the fluid (separation object component) and a component (B) which is a component that is not desired to be separated from the fluid. Further, in addition to the component (A) and the component (B), the fluid may further contain a component (C) which is a component that is not positively desired to be selectively separated from the fluid and does not affect the selectivity even when it permeates the separation membrane as a permeated matter.

The fluid is a mixture of a plurality of components selected, for example, from water, alcohols, various organic solvents, aromatic compounds such as aromatic hydrocarbons, and aliphatic compounds such as aliphatic hydrocarbons. In the specification, the "fluid" refers to liquid, gas or a mixture of liquid and gas.

The aromatic compound includes, for example, an aromatic hydrocarbon such as toluene, phenol, styrene, xylene or trimethylbenzene.

Further, the aliphatic compounds includes, for example, an aliphatic hydrocarbon such as isooctane, heptane, pentane or decane.

Further, the alcohol includes, for example, ethanol, methanol, ethylene glycol or propanol.

The fluid may be, for example, a fluid containing an aromatic hydrocarbon as the component (A) and an aliphatic hydrocarbon as the component (B). Further, the fluid may be, for example, a fluid containing an alcohol as the component (A) and a hydrocarbon as the component (B). Further, it may be a fluid containing an alcohol as the component (A) and water as the component (B). Alternatively, it may be a fluid containing water as the component (A) and an organic solvent as the component (B).

Further, the fluid may be, for example, a fluid containing an aromatic hydrocarbon as the component (A), an aliphatic hydrocarbon as the component (B) and an aromatic hydrocarbon or an aliphatic hydrocarbon which is different from the component (A) and the component (B) as the component (C). Further, the fluid may be, for example, a fluid containing an alcohol as the component (A), an aliphatic hydrocarbon as the component (B) and an aromatic hydrocarbon as the component (C). The fluid may be, for example, gasoline or naphtha.

Further, in some aspect, the component (A) is a component having the highest concentration among the components whose concentrations are higher in the fluid of the permeation side than in the fluid of the feeding side, and the component (B) is a component whose concentration is lower in the fluid of the permeation side than in the fluid of the feeding side.

However, the combinations of the component (A), the component (B) and the component (C) are by no means limited to these examples, and any combination may be used in the range where the effect of the invention is achieved.

The separation membrane and laminate described above are applicable, for example, to a pervaporation method. For example, in the case of applying the separation membrane described above to the pervaporation method, a liquid mixture containing the component (A) and the component (B) as the fluid is brought into contact with the first surface side of the separation membrane, the component (A) is preferentially permeated into the separation membrane, and the atmosphere in the second surface side of the separation membrane is decompressed to permeate a permeated matter containing the component (A) permeated through the separation membrane from the second surface side as gas (vapor), whereby the component (A) can be selectively separated.

The degree of vacuum at the decompression of the atmosphere in the second surface side is, for example, 20 kPaG or less, and preferably 1 kPaG or less.

Further, in order to increase the permeation flow rate, it is preferred to feed the fluid in a heated state. The appropriate heating temperature of the fluid to be fed is not particularly limited because of depending on the composition of the fluid, and is, for example, from 30 to 100°C.

The laminate described above is also applicable to the pervaporation method in the same manner as the separation membrane.

Further, the separation membrane and laminate described above are also applicable to a membrane separation method, for example, a vapor permeation method, in addition to the pervaporation method.

Example

The invention will be described in detail below with reference to the examples, but the invention should not be construed as being limited thereto.

(Swelling amount)

Each membrane having a thickness of 50 $\mu$m and an area of each of the both surfaces of 2 cm$^3$ and being composed of cellulose triacetate (CTA, manufactured by Daicel Corp., LT105), cellulose acetate propionate (CAP), cellulose acetate butyrate (CAB), Rikacoat (manufactured by New Japan Chemical Co. Ltd., SN-20) (hereinafter also referred to as PI), PEBAX (registered trademark of Arkema S.A., MH 1657, polyether block amide copolymer) or Silyl EST 280 (manufactured by Kaneka Corp.) was prepared.

Each membrane prepared was immersed in a liquid mixture 1 containing 20% by volume of toluene (T), 10% by volume of xylene (X) and 70% by volume of isooctane (I) at 25°C for 24 hours and from the weight change before and after the immersion the swelling amount (g/g) by the liquid mixture 1 was calculated.

Similarly, each membrane prepared was immersed in a liquid mixture 2 containing 10% by volume of ethanol (E), 10% by volume of toluene (T) and 70% by volume of isooctane (I) at 25°C for 24 hours and from the weight change before and after the immersion the swelling amount (g/g) by the liquid mixture 2 was calculated.

The results are shown in Table 1.

(Swelling component concentration)

For each membrane prepared as described above, the concentration (unit: % by volume) of each component in the swelling component when swollen with the liquid mixture 1 or the liquid mixture 2 was measured by heating the membrane immersed in the same manner as described above by a head space sampler and measuring the gas phase after the heating by gas chromatography. The results are shown in Table 1.

(Vapor permeance)

As a porous support, a UF membrane (or ultrafiltration membrane) RS-50 manufactured by Nitto Denko Corp. was used. On the porous support were laminated a membrane composed of PEBAX (registered trademark of Arkema S.A., MH 1657, polyether block amide copolymer) or a membrane composed of Silyl EST 280 (manufactured by Kaneka Corp.), each having a thickness of 2 $\mu$m, by a coating method. Further, on the membrane laminated with PEBAX was laminated a membrane composed of cellulose triacetate (CTA, manufactured by Daicel Corp., LT105), a membrane composed of cellulose propionate (CAP, manufactured by Aldrich, molecular weight: 75000), a membrane composed of cellulose butyrate (CAB, manufactured by Aldrich, molecular weight: 70000) or a membrane composed of Rikacoat (manufactured by New Japan Chemical Co. Ltd., SN-20) (PI) ,each having a thickness of 1 $\mu$m, by a coating method to prepare a laminate. Here, an area of each of the both surface of the laminate (separation membrane) was 33.16 cm$^2$.

For each membrane prepared as described above, the vapor permeance (unit: GPU) with respect to each component of ethanol (E), toluene (T), xylene (X) and isooctane (I) was measured by performing a vapor permeation test using a vapor permeation membrane method as shown below.

First, the laminate prepared as described above was set in a metal cell and sealed with an O-ring so as not to generate leakage. In the metal cell, 100 ml of ethanol (E), toluene (T), xylene (X) or isooctane (I) previously prepared was housed to form a state where a side opposite to the RS-50 side of the laminate set was brought into contact with vapor generated from the fluid described above. The entire cell was placed in a water bath, heated at 80°C and at the stage where the temperature reached to the preset temperature, a pressure of -100 kPa was applied by a vacuum pump from the RS-50 side. The component permeated through the laminate in a gas state was trapped by cooling with liquid nitrogen at -196°C and the vapor permeance was calculated according to the formula shown below using the weight of liquefied state.

$$\text{Vapor permeance [GPU]} = (\text{permeation amount } [cm^3(STP)])/((\text{permeation time } [s]$$

$$\times \text{ membrane area } [cm^2] \times (\text{partial pressure of feeding side } [cmHg] \text{ - partial pressure of}$$

$$\text{permeation side } [cmHg]))$$

The vapor permeance of CTA, CAP, CAB or PI was calculated according to the formula shown below by taking the vapor permeance calculated as above as P(ALL) and the vapor permeance of PEBAX as P(PEBAX).

$$\text{Vapor permeance [GPU]} = 1/(3/P(ALL) - 2/P(PEBAX))$$

The results are shown in Table 1.

(Vapor permeance ratio)

From the vapor permeance measured as described above, the vapor permeance ratio (E/I, T/I or X/I) in each membrane was calculated. The results are shown in Table 1.

[Table 1]

Table 1

| | Swelling Amount (g/g) | | Swelling Component Concentration (% by volume) | | | | | | | | Vapor Permeance (GPU) | | | | Vapor Permeance Ratio | | |
|---|---|---|---|---|---|---|---|---|---|---|---|---|---|---|---|---|---|
| | Liquid Mixture 1 | Liquid Mixture 2 | Liquid Mixture 1 | | | | Liquid Mixture 2 | | | | E | T | X | I | E/I | T/I | X/I |
| | | | T | X | I | T+X | E | T | I | E+T | | | | | | | |
| CTA | 0.03 | 0.11 | 75 | 20 | 5 | 95 | 20 | 64 | 16 | 84 | 126.4 | 70.5 | 33.3 | 0.4 | 345 | 192 | 91 |
| CAP | 0.08 | 0.14 | 54 | 24 | 22 | 78 | 32 | 41 | 27 | 73 | | 66.3 | 65.5 | 1.0 | | 66 | 66 |
| CAB | 0.12 | 0.20 | 44 | 26 | 29 | 71 | 27 | 36 | 37 | 63 | | 58.1 | 63.2 | 5.9 | | 10 | 11 |
| PI | 0.01 | 0.03 | 60 | 25 | 15 | 85 | 14 | 76 | 10 | 90 | 94.9 | 35.4 | 33.2 | 1.7 | 56 | 21 | 20 |
| PEBAX | 0.12 | 0.26 | 28 | 35 | 37 | 63 | 12 | 55 | 33 | 68 | 246.9 | 172.6 | 151.7 | 98.4 | 3 | 2 | 2 |
| Silyl | 8.07 | 7.36 | 20 | 13 | 67 | 33 | 7 | 20 | 73 | 27 | 1226.3 | 486.8 | 348.8 | 365.7 | 3 | 1 | 1 |

(SP value)

The SP values of CTA, CAP, CAB, PEBAX, ethanol, isooctane, heptane, toluene, xylene and trimethylbenzene are shown in Table 2. Here, the SP values of these substances were calculated by Fedors method.

[Table 2]

Table 2

|  | SP Value ($(cal/cm^3)^{1/2}$) |
|---|---|
| CTA | 12 |
| CAP | 11.1 |
| CAB | 10.9 |
| PEBAX | 9.37 |
| Ethanol | 12.7 |
| Isooctane | 7.24 |
| Heptane | 7.69 |
| Toluene | 9.14 |
| Xylene | 9.10 |
| Trimethylbenzene | 9.07 |

(Interaction energy)

The interaction energy between CTA and toluene obtained according to structural optimization by a semi-empirical molecular orbital PM6 method and calculation by a density functional method B3LYP/3-21G* was 114 $cal/angstrom^3$-polym. Further, the interaction energy between CTA and heptane calculated in the same manner as above was 52.6 $cal/angstrom^3$-polym. Further, the interaction energy between PEBAX and toluene calculated in the same manner as above was 124 $cal/angstrom^3$-polym.

(Free volume fraction)

The free volume fraction of CTA at a temperature of 298K calculated by Bondi method was 0.116. Further, the free volume fraction of PEBAX at a temperature of 298K calculated in the same manner as above was 0.159.

<Example 1>

As a porous support, a UF membrane (or ultrafiltration membrane) RS-50 manufactured by Nitto Denko Corp. was used. On the porous support was laminated a membrane (second layer) composed of PEBAX (registered trademark of Arkema S.A., MH 1657, polyether block amide copolymer) having a thickness of 0.95 $\mu$m by a coating method, and then thereon was laminated a membrane (first layer) composed of cellulose triacetate (CTA, manufactured by Daicel Corp., LT105) having a thickness of 0.75 $\mu$m by a coating method, whereby a laminate including the separation membrane composed of the first layer and the second layer was prepared. Here, an area of each of the both surface of the laminate (separation membrane) was 33.16 $cm^2$.

<Example 2>

A laminate of Example 2 was prepared in the same manner as in Example 1 except for forming a membrane composed of Rikacoat (manufactured by New Japan Chemical Co. Ltd., SN-20) (PI) having a thickness of 0.56 $\mu$m as the first layer and a membrane composed of PEBAX having a thickness of 2.4 $\mu$m as the second layer.

<Comparative Example 1>

A laminate of Comparative Example 1 was prepared in the same manner as in Example 1 except for forming a membrane composed of PEBAX having a thickness of 1.4 $\mu$m as the first layer and a membrane composed of CTA having a thickness of 0.55 $\mu$m as the second layer.

<Comparative Example 2>

A laminate of Comparative Example 2 was prepared in the same manner as in Example 1 except for forming a membrane composed of Silyl EST 280 (manufactured by Kaneka Corp.) having a thickness of 0.25 $\mu$m as the first layer and a membrane composed of CTA having a thickness of 0.65 $\mu$m as the second layer.

(Preparation of liquid mixture)

20% by volume of toluene (T), 10% by volume of xylene (X) and 70% by volume of isooctane (I) were mixed to prepare liquid mixture 1.

(Separation test)

For each laminate (separation membrane) prepared in Examples 1 to 2 and Comparative Examples 1 to 2, the separation test using a permeation vaporization membrane separation method was performed as described below. First, the laminate prepared as described above was set in a metal cell and sealed with an O-ring so as not to generate leakage. In the metal cell, 250 ml of the liquid mixture 1 previously prepared as described above was housed to form a state where the feeding side (first layer side) of the separation membrane of the laminate set was immersed in the liquid surface. The entire cell was placed in a water bath, heated at 70°C and at the stage where the temperature reached to the preset temperature, a pressure of -100 kPa was applied by a vacuum pump from the permeation side of the separation membrane (side opposite to the separation membrane side of the laminate). The component permeated through the separation membrane (laminate) in a gas state was trapped by cooling with liquid nitrogen at -196°C and the component collected in the liquefied state was subjected to component analysis by gas chromatography.

The total permeation flow rate (flux) (kg/m$^2$/hr) of toluene and xylene, the composition of the permeated matter (indication by % by volume), the ratio (volume ratio) of toluene to isooctane and the ratio (volume ratio) of xylene to isooctane in the permeated matter, and the total concentration (% by volume) of toluene and xylene in the permeated matter, measured by the separation test are shown in Table 3.

In the separation test, the component (A) is toluene, the component (B) is isooctane, and the component (C) is xylene.

[Table 3]

Table 3

| | Material of Membrane | | Thickness of Membrane (μm) | | T + X Flux (kg/m²/hr) | Composition of Permeated Matter (% by volume) | | | Volume Ratio in Permeated Matter | | T + X Concentration in Permeated Matter (% by volume) |
|---|---|---|---|---|---|---|---|---|---|---|---|
| | First Layer | Second Layer | First Layer | Second Layer | | I | T | X | T/I | X/I | |
| Example 1 | CTA | PEBEX | 0.75 | 0.95 | 0.073 | 0.6 | 90.7 | 8.7 | 142 | 14 | 99.4 |
| Example 2 | PI | PEBEX | 0.56 | 2.4 | 0.128 | 9.9 | 73.9 | 16.2 | 7 | 2 | 90.1 |
| Comparative Example 1 | PEBAX | CTA | 1.4 | 0.55 | 0.006 | 1.0 | 82.4 | 16.5 | 83 | 17 | 99.0 |
| Comparative Example 2 | Silyl | CTA | 0.25 | 0.65 | 0.041 | 2.4 | 77.2 | 20.4 | 32 | 8 | 97.6 |

Further, for each laminate (separation membrane) of Examples 1 to 2 and Comparative Examples 1 to 2, the swelling amount (unit: g/g) of the first layer and the second layer with the liquid mixture 1, the concentration (unit: % by volume) of toluene (T) in the swelling component in the first layer and the second layer, and the vapor permeance ratio (T/I) of toluene (T) to isooctane (I) in the first layer and the second layer are summarized in Table 4.

[Table 4]

Table 4

| | Swelling Amount (g/g) | | T Concentration in Swelling Component (% by volume) | | Vapor Permeance Ratio (T/I) | |
|---|---|---|---|---|---|---|
| | First Layer | Second Layer | First Layer | Second Layer | First Layer | Second Layer |
| Example 1 | 0.03 | 0.12 | 75 | 28 | 192 | 2 |
| Example 2 | 0.01 | 0.12 | 60 | 28 | 21 | 2 |
| Comparative Example 1 | 0.12 | 0.03 | 28 | 75 | 2 | 192 |
| Comparative example 2 | 8.07 | 0.03 | 20 | 75 | 1 | 192 |

Further, for the separation membrane of Example 1, $|SP_1\text{-}SP_A|$, $|SP_1\text{-}SP_B|$, $|SP_2\text{-}SP_A|$ and $|SP_2\text{-}SP_B|$ were calculated as described below by taking the SP value of CTA as $SP_1$, the SP value of PEBAX as $SP_2$, the SP value of toluene as $SP_A$ and the SP value of isooctane as $SP_B$.

$$\left| SP_1\text{-}SP_A \right| = 2.86$$

$$\left| SP_1\text{-}SP_B \right| = 4.76$$

$$\left| SP_2\text{-}SP_A \right| = 0.23$$

$$\left| SP_2\text{-}SP_B \right| = 2.13$$

That is, the separation membrane of Example 1 satisfies each of the relationships described below.

$$\left| SP_1\text{-}SP_A \right| < \left| SP_1\text{-}SP_B \right| \qquad (1)$$

$$\left| SP_2\text{-}SP_A \right| < \left| SP_1\text{-}SP_A \right| \qquad (2)$$

$$\left| SP_2\text{-}SP_A \right| < \left| SP_2\text{-}SP_B \right| \qquad (3)$$

On the other hand, for the separation membrane of Comparative Example 1, $|SP_1\text{-}SP_A|$, $|SP_1\text{-}SP_B|$, $|SP_2\text{-}SP_A|$ and $|SP_2\text{-}SP_B|$ were calculated as described below by taking the SP value of PEBAX as $SP_1$, the SP value of CTA as $SP_2$, the SP value of toluene as $SP_A$ and the SP value of isooctane as $SP_B$.

$$\left|\text{SP}_1\text{-SP}_A\right| = 0.23$$

$$\left|\text{SP}_1\text{-SP}_B\right| = 2.13$$

$$\left|\text{SP}_2\text{-SP}_A\right| = 2.86$$

$$\left|\text{SP}_2\text{-SP}_B\right| = 4.76$$

That is, the separation membrane of Comparative Example 1 satisfies each of the relationships described below,

$$\left|\text{SP}_1\text{-SP}_A\right| < \left|\text{SP}_1\text{-SP}_B\right| \qquad (1)$$

$$\left|\text{SP}_2\text{-SP}_A\right| < \left|\text{SP}_2\text{-SP}_B\right| \qquad (3)$$

but does not satisfy the relationship described below.

$$\left|\text{SP}_2\text{-SP}_A\right| < \left|\text{SP}_1\text{-SP}_A\right| \qquad (2)$$

As can be seen from Table 3 and the like, the separation membrane (laminate) of Examples 1 to 2 has a sufficiently high permeance and a high selectivity. On the other hand, in the separation membrane (laminate) of Comparative Examples 1 to 2, a sufficient permeance cannot be obtained.

<Example 3>

(Preparation of laminate)

As a porous support, a UF membrane (or ultrafiltration membrane) RS-50 manufactured by Nitto Denko Corp. was used. On the porous support was laminated a membrane (second layer) composed of PEBAX (registered trademark of Arkema S.A., MH 1657, polyether block amide copolymer) having a thickness of 1 $\mu$m by a coating method, and then thereon was laminated a membrane (first layer) composed of cellulose triacetate (CTA, manufactured by Daicel Corp., LT105) having a thickness of 1 $\mu$m by a coating method, whereby a laminate comprising the separation membrane composed of the first layer and the second layer was prepared. Here, an area of each of the both surface of the laminate (separation membrane) was 33.16 cm$^2$.

<Example 4>

The laminate of Example 4 was prepared in the same manner as in Example 3 except for changing the thickness of the membrane (second layer) composed of PEBAX to 1.5 $\mu$m to prepare the separation membrane.

<Example 5>

The laminate of Example 5 was prepared in the same manner as in Example 3 except for changing the thickness of the membrane (second layer) composed of PEBAX to 2.5 $\mu$m to prepare the separation membrane.

<Comparative Example 3>

The laminate of Comparative Example 3 was prepared in the same manner as in Example 3 except for using the membrane composed of PEBAX having a thickness of 1 $\mu$m in a single layer as the separation membrane.

<Comparative Example 4>

The laminate of Comparative Example 4 was prepared in the same manner as in Example 3 except for using the membrane composed of CTA having a thickness of 1.5 μm in a single layer as the separation membrane.

<Comparative Example 5>

The laminate of Comparative Example 5 was prepared in the same manner as in Example 3 except for using the membrane composed of CTA having a thickness of 0.8 μm in a single layer as the separation membrane.

(Preparation of liquid mixture)

10% by volume of ethanol (E), 20% by volume of toluene (T) and 70% by volume of isooctane (I) were mixed to prepare liquid mixture 2.

(Separation test)

For each laminate (separation membrane) prepared in Examples 3 to 5 and Comparative Examples 3 to 5, the separation test using a permeation vaporization membrane separation method was performed as described below. First, the laminate prepared as described above was set in a metal cell and sealed with an O-ring so as not to generate leakage. In the metal cell, 250 ml of the liquid mixture 2 previously prepared as described above was housed to form a state where the feeding side (first layer side) of the separation membrane of the laminate set was immersed in the liquid surface. The entire cell was placed in a water bath, heated at 70°C and at the stage where the temperature reached to the preset temperature, a pressure of -100 kPa was applied by a vacuum pump from the permeation side of the separation membrane (side opposite to the separation membrane side of the laminate). The component permeated through the separation membrane (laminate) in a gas state was trapped by cooling with liquid nitrogen at -196°C and the component collected in the liquefied state was subjected to component analysis by gas chromatography.

The total permeation flow rate (flux) (kg/m$^2$/hr) of ethanol and toluene, the composition of the permeated matter (indication by % by volume), the ratio (volume ratio) of ethanol to isooctane in the permeated matter, and the total concentration (% by volume) of ethanol and toluene in the permeated matter, measured by the separation test are shown in Table 5.

In the separation test, the component (A) is ethanol, the component (B) is isooctane, and the component (C) is toluene.

[Table 5]

Table 5

| | Material of Membrane | | Thickness of Membrane (μm) | | E + T Flux (kg/m²/hr) | Composition of Permeated Matter (% by volume) | | | Volume Ratio in Permeated Matter | | E + T Concentration in Permeated Matter (% by volume) |
|---|---|---|---|---|---|---|---|---|---|---|---|
| | First Layer | Second Layer | First Layer | Second Layer | | E | T | I | E/I | T/I | |
| Example 3 | CTA | PEBAX | 1 | 1 | 7.46 | 74.6 | 21.0 | 4.4 | 17 | 5 | 95.6 |
| Example 4 | CTA | PEBAX | 1 | 1.5 | 7.31 | 75.1 | 21.1 | 3.8 | 20 | 6 | 96.2 |
| Example 5 | CTA | PEBAX | 1.5 | 2.5 | 6.16 | 75.0 | 20.7 | 4.3 | 17 | 5 | 95.7 |
| Comparative Example 3 | Single Layer of PEBAX | | 1 | | 9.55 | 44.6 | 24.7 | 30.7 | 1 | 1 | 69.3 |
| Comparative Example 4 | Single Layer of CTA | | 1.5 | | 2.07 | 89.0 | 10.0 | 1.0 | 89 | 10 | 99.0 |
| Comparative Example 5 | Single Layer of CTA | | 1.8 | | 3.27 | 85.8 | 11.8 | 2.4 | 36 | 5 | 97.6 |

For each laminate (separation membrane) of Examples 3 to 5, the swelling amounts (unit: g/g) of the first layer and the second layer with the liquid mixture 2 are 0.11 g/g and 0.26 g/g, respectively. Further, the concentrations (unit: % by volume) of ethanol (E) in the swelling component in the first layer and the second layer are 20% by volume and 12% by volume, respectively. Further, the vapor permeance ratios (E/I) of ethanol (E) to isooctane (I) in the first layer and the second layer are 345 and 3, respectively.

On the other hand, for the laminate (separation membrane) of Comparative Examples 3 composed of a single layer of PEBAX, the swelling amounts (unit: g/g) of the first surface side and the second surface side with the liquid mixture 2 are both 0.26 g/g. Further, the concentrations (unit: % by volume) of ethanol (E) in the swelling component of the first surface side and the second surface side are both 12% by volume. Further, the vapor permeance ratios (E/I) of ethanol (E) to isooctane (I) of the first surface side and the second surface side are both 3.

Further, for each laminate (separation membrane) of Comparative Examples 4 to 5 composed of a single layer of CTA, the swelling amounts (unit: g/g) of the first surface side and the second surface side with the liquid mixture 2 are both 0.11 g/g. Further, the concentrations (unit: % by volume) of ethanol (E) in the swelling component of the first surface side and the second surface side are both 20% by volume. Further, the vapor permeance ratios (E/I) of ethanol (E) to isooctane (I) of the first surface side and the second surface side are both 345.

As can be seen from Table 5 and the like, the separation membrane (laminate) of Examples 3 and 5 has a sufficiently high permeance and a high selectivity. On the other hand, in the separation membrane (laminate) of Comparative Example 3, a sufficient selectivity cannot be obtained. Further, in the separation membrane (laminate) of Comparative Examples 4 to 5, a sufficiently permeance cannot be obtained.

While the preferred embodiments of the invention have been described above, the invention is not limited to the embodiments described above, and various modifications and substitutions can be made to the embodiments described above without departing from the scope of the invention.

This application is based on a Japanese patent application filed on November 17, 2016 (Japanese Patent Application No. 2016-224163), and the whole contents thereof are incorporated herein by reference.

**Claims**

1. A separation membrane for selectively separating a component (A) from a fluid containing the component (A) and a component (B),
   the separation membrane comprising a first surface and a second surface opposite to the first surface,
   wherein an affinity of the first surface side of the separation membrane for the component (A) is higher than an affinity of the first surface side of the separation membrane for the component (B), and
   wherein an affinity of the second surface side of the separation membrane for the component (A) is higher than the affinity of the first surface side of the separation membrane for the component (A).

2. The separation membrane as claimed in Claim 1, wherein the affinity of the second surface side of the separation membrane for the component (A) is higher than an affinity of the second surface side of the separation membrane for the component (B).

3. A separation membrane for selectively separating a component (A) from a fluid containing the component (A) and a component (B),
   the separation membrane comprising a first surface and a second surface opposite to the first surface,
   wherein the separation membrane satisfies relationships represented by formula (1) and formula (2) described below:

$$\left| SP_1 - SP_A \right| < \left| SP_1 - SP_B \right| \qquad (1)$$

$$\left| SP_2 - SP_A \right| < \left| SP_1 - SP_A \right| \qquad (2)$$

wherein $SP_A$ represents an SP value of the component (A), $SP_B$ represents an SP value of the component (B), $SP_1$ represents an SP value of the first surface side of the separation membrane, and $SP_2$ represents an SP value of the second surface side of the separation membrane.

4. The separation membrane as claimed in Claim 3, which further satisfies a relationship represented by formula (3) described below.

$$\left| SP_2\text{-}SP_A \right| \; < \; \left| SP_2\text{-}SP_B \right| \qquad (3)$$

5. A separation membrane for selectively separating a component (A) from a fluid containing the component (A) and a component (B),
the separation membrane comprising a first surface and a second surface opposite to the first surface,
wherein an interaction energy between the component (A) and the first surface side of the separation membrane is higher than an interaction energy between the component (B) and the first surface side of the separation membrane, and
wherein an interaction energy between the component (A) and the second surface side of the separation membrane is lower than the interaction energy between the component (A) and the first surface side of the separation membrane.

6. The separation membrane as claimed in Claim 5, wherein the interaction energy between the component (A) and the second surface side of the separation membrane is higher than an interaction energy between the component (B) and the second surface side of the separation membrane.

7. The separation membrane as claimed in any one of Claims 1 to 6, wherein a free volume fraction of the first surface side of the separation membrane is smaller than a free volume fraction of the second surface side of the separation membrane.

8. The separation membrane as claimed in any one of Claims 1 to 7, wherein a swelling amount of the first surface side of the separation membrane with the fluid is smaller than a swelling amount of the second surface side of the separation membrane with the fluid.

9. The separation membrane as claimed in any one of Claims 1 to 8, wherein a vapor permeance ratio in terms of the component (A) to the component (B) of the first surface side of the separation membrane is larger than a vapor permeance ratio in terms of the component (A) to the component (B) of the second surface side of the separation membrane.

10. The separation membrane as claimed in any one of Claims 1 to 9, wherein a concentration of the component (A) occupied in a swelling component when the first surface side of the separation membrane is swollen with the fluid is larger than a concentration of the component (A) occupied in a swelling component when the second surface side of the separation membrane is swollen with the fluid.

11. A separation membrane for selectively separating a component (A) from a fluid containing the component (A) and a component (B),
the separation membrane comprising a first surface and a second surface opposite to the first surface,
wherein a swelling amount of the first surface side of the separation membrane with the fluid is smaller than a swelling amount of the second surface side of the separation membrane with the fluid, and
wherein a vapor permeance ratio in terms of the component (A) to the component (B) of the first surface side of the separation membrane is larger than a vapor permeance ratio in terms of the component (A) to the component (B) of the second surface side of the separation membrane.

12. The separation membrane as claimed in Claim 11, wherein a concentration of the component (A) occupied in a swelling component when the first surface side of the separation membrane is swollen with the fluid is larger than a concentration of the component (A) occupied in a swelling component when the second surface side of the separation membrane is swollen with the fluid.

13. The separation membrane as claimed in any one of Claims 1 to 12, which comprises a multilayer structure comprising at least a first layer providing the first surface and a second layer providing the second surface.

14. A laminate, comprising a porous support, and the separation membrane as claimed in any one of Claims 1 to 13 provided on the porous support.

EP 3 542 891 A1

<table>
<tr><td colspan="2">INTERNATIONAL SEARCH REPORT</td><td colspan="2">International application No.</td></tr>
<tr><td colspan="2"></td><td colspan="2">PCT/JP2017/041341</td></tr>
</table>

A.  CLASSIFICATION OF SUBJECT MATTER
Int.Cl.  B01D69/02(2006.01)i,  B01D61/36(2006.01)i,  B01D69/10(2006.01)i,
         B01D69/12(2006.01)i, B01D71/56(2006.01)i, B32B5/18(2006.01)i

According to International Patent Classification (IPC) or to both national classification and IPC

B.  FIELDS SEARCHED

Minimum documentation searched (classification system followed by classification symbols)
Int.Cl.  B01D61/00-71/82, B32B5/18

Documentation searched other than minimum documentation to the extent that such documents are included in the fields searched
      Published examined utility model applications of Japan        1922–1996
      Published unexamined utility model applications of Japan      1971–2018
      Registered utility model specifications of Japan              1996–2018
      Published registered utility model applications of Japan      1994–2018

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 5-031338 A (KANEBO KABUSHIKI KAISHA) 09 February 1993, claims, paragraphs [0010]-[0023] (Family: none) | 1–14 |
| A | JP 57-165005 A (KURARAY CO., LTD.) 09 October 1982, claims, page 1, lower right column, line 16 to page 2, lower right column, line 7, page 3, lower right column, line 19 to page 4, lower right column, line 2, examples 1, 2 & EP 0062494 A2, page 2, line 6 to page 5, line 15, page 11, line 10 to page 23, line 15, example 4, claims | 1–14 |

☒  Further documents are listed in the continuation of Box C.    ☐  See patent family annex.

*    Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

Date of the actual completion of the international search
      05 February 2018 (05.02.2018)

Date of mailing of the international search report
      13 February 2018 (13.02.2018)

Name and mailing address of the ISA/
      Japan Patent Office
      3-4-3, Kasumigaseki, Chiyoda-ku,
      Tokyo 100-8915, Japan

Authorized officer

Telephone No.

Form PCT/ISA/210 (second sheet) (January 2015)

22

**INTERNATIONAL SEARCH REPORT**

| International application No. |
| --- |
| PCT/JP2017/041341 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 9-267031 A (NEDERLANDSE ORGANISATIE VOOR TOEGEPAST-NATUURWETENSCHAPPELIJK ONDERZOEK TNO) 14 October 1997, claims, paragraphs [0017]-[0018], [0034]-[0051] & EP 0760250 A1, page 3, lines 31-41, page 5, line 15 to page 8, line 9, claims & NL 1001060 C & CA 2183810 A1 | 1-14 |
| A | WO 2016/148132 A1 (NGK INSULATORS, LTD.) 22 September 2016, paragraphs [0044]-[0049] & DE 112016001282 T5 | 1-14 |

Form PCT/ISA/210 (continuation of second sheet) (January 2015)

## INTERNATIONAL SEARCH REPORT

| International application No. |
|---|
| PCT/JP2017/041341 |

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:
See extra sheet, page 1

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

**INTERNATIONAL SEARCH REPORT**

| International application No. |
| --- |
| PCT/JP2017/041341 |

See 1$^{st}$ page of special pages.

<1$^{st}$ page of special pages>

<Continuation of Box No. III>
The invention as in claim 1, the invention as in claim 3, the invention as in claim 5, and the invention as in claim 11 have the common technical feature of a separation membrane for selectively separating component (A) from a fluid containing components (A) and (B), wherein the separation membrane has a first surface and a second surface which is on the reverse side of the first surface.
However, the separation membrane which has a first surface and a second surface on the reverse side of the first surface, and is for selectively separating component (A) from a fluid containing arbitrary components (A) and (B) which are merely different components is a well-known art that does not require the citing of documents, and said technical feature does not make a contribution in light of such well-known art. Thus, said technical feature cannot be said to be a special technical feature. In addition, the relationships between the magnitudes of affinity or SP value and interaction energy are not considered to be closely correlated to the relationships between the magnitudes of swelling amount or vapor permeation rate ratio.
In addition, two inventions (groups) described below are included in claims.

(Invention 1) (Claims 1-10 and claims 13-14 which refer to any one of claims 1-10)
A separation membrane for selectively separating component (A) from a fluid containing components (A) and (B), wherein the separation membrane has a first surface and a second surface which is on the reverse side of the first surface, the affinity to said component (A) on the side of said first surface is higher than the affinity to said component (B) on the side of said first surface, and thus the affinity to said component (A) on the side of said second surface is higher than the affinity to said component (A) on the side of said first surface, and this is specified as the relationship between the magnitudes of affinity, SP value, or interaction energy.

Form PCT/ISA/210 (extra sheet) (January 2015)

**INTERNATIONAL SEARCH REPORT**

| International application No. |
|---|
| PCT/JP2017/041341 |

(Invention 2) (Claims 11–12 and claims 13–14 which refer to either claim 11 or 12)

A separation membrane for selectively separating component (A) from a fluid containing components (A) and (B) wherein the separation membrane has a first surface and a second surface which is on the reverse side of the first surface, the amount of swelling of said separation membrane occurring on the side of said first surface due to the fluid is less than the amount of swelling of said separation membrane occurring on the side of said second surface side due to the fluid, and the vapor permeation rate ratio of component (A) to component (B) on said first surface side of said separation membrane is greater than the vapor permeation rate ratio of component (A) to component (B) on said second surface side of said separation membrane.

<Regarding subject of search>

(1) The inventions as in claim 1, claim 3, claim 5, and claim 11 are "separation membranes".

Meanwhile, embodiments of the description of the present application only describe a separation membrane used in a permeation evaporation method, i.e., a pervaporation method, and do not provide a specific explanation about whether such a separation membrane can be used as a reverse permeation membrane or other separation membrane.

In addition, it is clear that starting from the description of background art including prior art documents, the description of the present application only discloses prior art relating to a separation membrane used in a permeation evaporation method (pervaporation method) or a vapor permeation method (pervaporation method).

(Continued in 2$^{nd}$ page of special pages)

<2$^{nd}$ page of special pages>

In other words, since the description of the present application only describes the separation membrane used in a pervaporation method and methods related thereto, it is not recognized that there is an objective basis on which the separation membrane of the present application can be extended and generalized to a separation membrane that is applicable to all methods.

Thus, since only a "separation membrane" used in a pervaporation method and methods related thereto is disclosed within the meaning of PCT Article 5, said claims lack support within the meaning of PCT Article 6.

Form PCT/ISA/210 (extra sheet) (January 2015)

**INTERNATIONAL SEARCH REPORT**

International application No.

PCT/JP2017/041341

(2) In claim 1, claim 3, claim 5, and claim 11, the configuration of the "separation membrane" in each claim is specified with respect to "component (A)" and "component (B)", but any compound can be included in "component (A)" or "component (B)".

In addition, since all separation membranes have parameters for the affinity to a component to be separated, SP value, interaction energy, and vapor permeation rate ratio, the ranges of the affinity to a component to be separated, SP value, interaction energy, and vapor permeation rate ratio determined by "component (A)" and "component (B)", which are arbitrary compounds that may contain any compound, can be any range.

For this reason, considering the technical common knowledge, at the time of filing, that in the field of chemistry, it is comparatively difficult to predict the actions and effects of particular chemicals, it is impossible to specify the chemical structure or chemical properties of the "separation membrane" that is delimited by the affinity, SP value, interaction energy, or vapor permeation rate ratio of any range.

Meanwhile, an embodiment in the description of the present application indicates that high permeation rate and high selectivity can only be obtained by using a laminate, which is obtained by stacking a separation membrane composed of PEBAX on a porous support and then stacking a separation membrane composed of triacetylcellulose or SilicaCoat thereon, as a separation membrane to separate, by a pervaporation method, a fluid to be separated, wherein the fluid is a liquid mixture in which component (A) is toluene and component (B) is isooctane, or component (A) is ethanol and component (B) is isooctane.

In addition, referring to the description of the present application, it is indicated that an aromatic hydrocarbon such as phenol, styrene or the like can be employed instead of toluene, an aliphatic hydrocarbon such as heptanes, pentane or the like can be employed instead of isooctane, a lower alcohol such as methanol, ethylene glycol or the like can be employed instead of ethanol, and a laminate obtained by stacking a separation membrane composed of a heptane polyether block amide copolymer on a porous support and then stacking a separation membrane composed of triacetylcellulose, propionic acid cellulose, acetic acid cellulose, or SilicaCoat can be employed as a separation membrane, but there is no disclosure indicating that when a compound other than said compound group is employed as a fluid to be separated or when a polymer other than said polymer is employed as a separation membrane, the separation membrane has a high permeation rate and selectivity on the level indicated in an embodiment of the description of the present application.

Form PCT/ISA/210 (extra sheet) (January 2015)

| **INTERNATIONAL SEARCH REPORT** | International application No. |
| | PCT/JP2017/041341 |

(Continued in 3<sup>rd</sup> page of special pages)

<3<sup>rd</sup> page of special pages>

Therefore, since, when a liquid mixture in which component (A) is an aromatic hydrocarbon and component (B) is an aromatic hydrocarbon or component (A) is a lower alcohol and component (B) is an aliphatic compound is used as a fluid to be separated, the "separation membrane" can only be a "separation membrane" in which the limitations regarding "affinity" set forth in claim 1, "SP" set forth in claim 3, "interaction energy" set forth in claim 5, or "swelling amount" and "vapor permeation rate ratio" set forth in claim 11 are satisfied, or a "separation membrane" which is composed of a laminate obtained by stacking a separation membrane composed of a polyether block amide copolymer on a porous support and then stacking a separation membrane composed of triacetylcellulose, propionic acid cellulose, acetic acid cellulose, or SilicaCoat, said claims lack support within the meaning of PCT Article 6.

Accordingly, searches were carried out for said supported ranges, i.e., cases where a liquid mixture in which component (A) is an aromatic hydrocarbon and component (B) is an aromatic hydrocarbon, or component (A) is a lower alcohol and component (B) is an aliphatic hydrocarbon is used as a fluid to be separated, wherein the "separation membrane" is a "separation membrane" which satisfies the limitations regarding "affinity" set forth in claim 1, "SP" set forth in claim 3, "interaction energy" set forth in claim 5, or "swelling amount" and "vapor permeation rate ratio" set forth in claim 11, and is used in a pervaporation method and methods related thereto, or is a "separation membrane" which is composed of a laminate obtained by stacking a separation membrane composed of a polyether block amide copolymer on a porous support and then stacking a separation membrane composed of triacetylcellulose, propionic acid cellulose, acetic acid cellulose, or SilicaCoat, and is used in a pervaporation method and methods related thereto.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010070992 A
- WO 2016148132 A
- JP 2012501830 A
- JP 2014518754 A
- JP 2016224163 A